(19) Europäisches Patentamt
European Patent Office
Office européen des brevets

(11) **EP 3 850 339 B1**

(12) **FASCICULE DE BREVET EUROPEEN**

(45) Date de publication et mention
de la délivrance du brevet:
**24.08.2022 Bulletin 2022/34**

(21) Numéro de dépôt: **19786375.6**

(22) Date de dépôt: **09.09.2019**

(51) Classification Internationale des Brevets (IPC):
**G01N 21/3504** *(2014.01)*   **G01N 21/03** *(2006.01)*
**G01N 21/61** *(2006.01)*

(52) Classification Coopérative des Brevets (CPC):
**G01N 21/3504; G01N 21/0303; G01N 21/61;**
G01N 2201/0873

(86) Numéro de dépôt international:
**PCT/FR2019/052080**

(87) Numéro de publication internationale:
**WO 2020/053515 (19.03.2020 Gazette 2020/12)**

(54) **CAPTEUR DE GAZ COMPACT**

KOMPAKTER GASSENSOR

COMPACT GAS SENSOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.09.2018 FR 1858154**

(43) Date de publication de la demande:
**21.07.2021 Bulletin 2021/29**

(73) Titulaire: **Elichens**
**38000 Grenoble (FR)**

(72) Inventeur: **DUPREZ, Hélène**
**38170 SEYSSINET-PARISET (FR)**

(74) Mandataire: **INNOV-GROUP**
**310, avenue Berthelot**
**69372 Lyon Cedex 08 (FR)**

(56) Documents cités:
**EP-A1- 3 208 601    US-A1- 2006 226 367
US-B1- 6 762 410**

**Description**

## DOMAINE TECHNIQUE

Le domaine technique de l'invention est un capteur optique de gaz, et plus particulièrement un capteur infrarouge non dispersif.

## ART ANTERIEUR

Le recours à des méthodes optiques pour l'analyse d'un gaz est assez fréquent. Des dispositifs permettent de déterminer la composition d'un gaz en se basant sur le fait que les espèces composant un gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le milieu.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, et partiellement absorbée par ce dernier. Les procédés comprennent généralement une mesure d'une onde lumineuse, dite onde lumineuse de référence, émise par la source, et non absorbée par le gaz analysé. L'onde lumineuse de référence peut être mesurée par un photodétecteur de référence. La comparaison entre l'onde lumineuse transmise, partiellement absorbée par le gaz et l'onde lumineuse de référence, non absorbée par le gaz, permet de caractériser le gaz. Il s'agit par exemple de déterminer une quantité d'une espèce gazeuse dans le gaz, selon la technologie désignée par le terme "NDIR par absorption". L'onde lumineuse de référence est mesurée par un photodétecteur de référence. Il peut s'agir d'un photodétecteur de référence différent du photodétecteur de mesure, et agencé de façon à être disposé face à la source de lumière le photodétecteur de référence étant associé à un filtre optique de référence. Le filtre optique de référence définit une bande spectrale de référence, dans laquelle le gaz à analyser ne présente pas d'absorption significative.

Le document EP2133684 décrit par exemple une configuration selon laquelle un photodétecteur de mesure et un photodétecteur de référence sont disposés symétriquement par rapport à une source de lumière.

Le document EP3208601 décrit un capteur de gaz non dispersif par infrarouge ménagé dans une enceinte compacte. L'enceinte comporte une source de lumière, un photodétecteur de mesure et un photodétecteur de référence. Deux parois elliptiques de l'enceinte permettent une conjugaison de la source de lumière respectivement avec le photodétecteur de mesure et avec le photodétecteur de référence. Les photodétecteurs de mesure et de référence s'étendent parallèlement aux parois elliptiques. Une telle configuration suppose que chaque photodétecteur soit disposé sur un support disposé dans l'enceinte, et s'étendant face aux parois elliptiques. Il en résulte une conception pouvant être complexe, et par conséquent onéreuse.

L'objectif de l'invention est de proposer un capteur de gaz aux performances optimisées, privilégiant notamment la compacité et simplicité de conception.

## EXPOSE DE L'INVENTION

Un premier objet de l'invention est un capteur de gaz comportant une enceinte, apte à recevoir le gaz, le capteur comportant également :

- une source de lumière, apte à émettre une onde lumineuse se propageant dans l'enceinte selon un faisceau d'émission;
- un photodétecteur de mesure et un photodétecteur de référence, étant chacun apte à détecter une onde lumineuse émise par la source de lumière et ayant traversé l'enceinte, le photodétecteur de mesure et le photodétecteur de référence définissant chacun un plan de détection;

le capteur étant tel que l'enceinte est délimitée par deux parois transversales, disposées l'une face à l'autre, les parois transversales étant reliées l'une à l'autre par une paroi périphérique, s'étendant, entre les parois transversales, autour d'un axe latéral, la paroi périphérique comportant :

- une première surface réfléchissante courbe, apte à recevoir une première partie du faisceau d'émission pour la réfléchir, formant ainsi un faisceau de mesure ;
- une deuxième surface réfléchissante courbe, apte à recevoir une deuxième partie du faisceau d'émission pour la réfléchir, formant ainsi un faisceau de référence.

Le capteur peut être tel que :

- le plan de détection du photodétecteur de mesure et le plan de détection du photodétecteur de référence s'étendent parallèlement ou sensiblement parallèlement à une paroi transversale ;
- le capteur comporte un premier réflecteur, agencé pour réfléchir une partie du faisceau de mesure vers le photodétecteur de mesure, et un deuxième réflecteur, agencé pour réfléchir une partie du faisceau de référence vers le photodétecteur de référence.

La première surface réfléchissante ainsi que le premier réflecteur permettent de conjuguer la source de lumière au photodétecteur de mesure. La deuxième surface réfléchissante ainsi que le deuxième réflecteur permettent de conjuguer la source de lumière au photodétecteur de référence.

Le photodétecteur de référence et le photodétecteur de mesure peuvent être disposés côte à côte, en étant connectés à une même carte électronique plane, ce qui facilite la conception du capteur, tout en améliorant la compacité.

Le capteur définit un plan transversal, ce dernier correspondant à un plan perpendiculaire ou sensiblement perpendiculaire à l'axe latéral Z. Les photodétecteurs de mesure et de référence s'étendent parallèlement au plan transversal, au sens ou leurs plans de détection respectifs s'étendent parallèlement au plan transversal.

Le capteur peut notamment être tel que :

- la première surface réfléchissante suit, dans le plan transversal, une partie d'une première ellipse, définissant un premier foyer;
- le premier foyer de la première ellipse est situé sur la source de lumière, ou à une distance de la source de lumière inférieure à 5 mm ;

de telle sorte que le faisceau d'émission se propage vers la première surface réfléchissante en formant un faisceau divergent.

La première ellipse peut définir un deuxième foyer, de telle sorte que le faisceau de mesure, réfléchi par la première surface réfléchissante, se propage vers le deuxième foyer de la première ellipse en formant un faisceau convergent. Le premier foyer et le deuxième foyer de la première ellipse sont distincts.

Selon un mode de réalisation,

- le premier réflecteur peut être de forme parabolique, définissant un foyer;
- le foyer du premier réflecteur est confondu avec le deuxième foyer de la première ellipse, ou situé à une distance inférieure à 5 mm de ce dernier.

Selon un mode de réalisation,

- la deuxième surface réfléchissante suit, dans le plan transversal, une partie d'une deuxième ellipse, définissant un premier foyer;
- le premier foyer de la deuxième ellipse est situé sur la source de lumière, ou à une distance de la source de lumière inférieure à 5 mm ;

de telle sorte que le faisceau d'émission se propage vers la deuxième surface réfléchissante en formant un faisceau divergent.

La deuxième ellipse peut alors définir un deuxième foyer, de telle sorte que le faisceau de référence, réfléchi par la deuxième surface réfléchissante, se propage vers le deuxième foyer de la deuxième ellipse en formant un faisceau convergent.

Selon un mode de réalisation :

- le deuxième réflecteur est de forme parabolique, définissant un foyer;
- le foyer du deuxième réflecteur est confondu avec le deuxième foyer de la deuxième ellipse, ou situé à une distance inférieure à 5 mm de ce dernier.

L'enceinte peut comporter au moins une ouverture, ménagée dans une des parois transversales, et destinée à l'admission ou à l'évacuation du gaz. De préférence, l'ouverture, ou chaque ouverture, est ménagée, dans la paroi transversale, à l'extérieur d'une projection selon l'axe latéral, et sur la paroi transversale, du faisceau d'émission et du faisceau de mesure. L'ouverture est de préférence également localisée à l'extérieur d'une projection, selon l'axe latéral, et sur la paroi transversale, du faisceau de référence.

Les parois transversales s'étendent de préférence selon un plan transversal, perpendiculaire à l'axe latéral, ou sensiblement perpendiculaire à ce dernier.

Selon une réalisation avantageuse, l'enceinte peut délimiter, selon le plan transversal, un espace inscrit dans un diamètre inférieur ou égal à 20 mm.

Un autre objet de l'invention est un dispositif de détection d'un gaz comportant un premier capteur selon le premier objet de l'invention et un deuxième capteur selon le premier objet de l'invention, le premier capteur et le deuxième capteur étant superposés l'un à l'autre, de telle sorte qu'une paroi transversale du premier capteur, comportant une ouverture, soit disposée face à une paroi transversale du deuxième capteur, comportant une ouverture, de façon à permettre une circulation de gaz à travers les ouvertures ménagées dans lesdites parois transversales. Le gaz peut alors circuler du premier capteur vers le deuxième capteur.

Un autre objet de l'invention est un procédé de détection d'un gaz dans un capteur selon le premier objet de l'invention, comportant les étapes suivantes :

- activation de la source de lumière, de façon à générer une onde lumineuse d'émission se propageant dans la cavité ;
- détection d'une intensité d'une onde lumineuse transmise, par le photodétecteur de mesure, dans une bande spectrale de mesure ;
- détection d'une intensité d'une onde lumineuse de référence, par le photodétecteur de référence, dans une bande spectrale de référence, différente de la bande spectrale de mesure ;
- estimation d'une quantité d'une espèce gazeuse dans le gaz à partir des intensités respectivement mesurées par le photodétecteur de mesure et par le photodétecteur de référence.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A est une vue 3D montrant l'enceinte d'un exemple de capteur de gaz ainsi qu'une source de lumière disposée dans l'enceinte.

La figure 1B représente une vue montrant les principaux composants d'un exemple de capteur de gaz, selon un plan transversal.

La figure 2A est une coupe schématisant la propagation de la lumière entre une première ellipse et un photodétecteur de mesure. La coupe de la figure 2A est réalisée selon un plan latéral, perpendiculaire au plan transversal.

La figure 2B est une coupe schématisant la propagation de la lumière entre une deuxième ellipse et un photodétecteur de référence. La coupe de la figure 2B est réalisée selon un plan latéral, perpendiculaire au plan transversal.

La figure 2C schématise une carte porteuse à laquelle sont connectés le photodétecteur de mesure et le photodétecteur de référence.

La figure 3 représente une coupe, selon le plan transversal, représentant la disposition des ellipses de mesure et de référence.

La figure 4 représente un exemple d'ouvertures pratiquées dans une paroi transversale de l'enceinte du capteur.

La figure 5 représente un dispositif obtenu par l'assemblage de deux capteurs superposés l'un à l'autre.

## EXPOSE DE MODES DE REALISATION PARTICULIERS

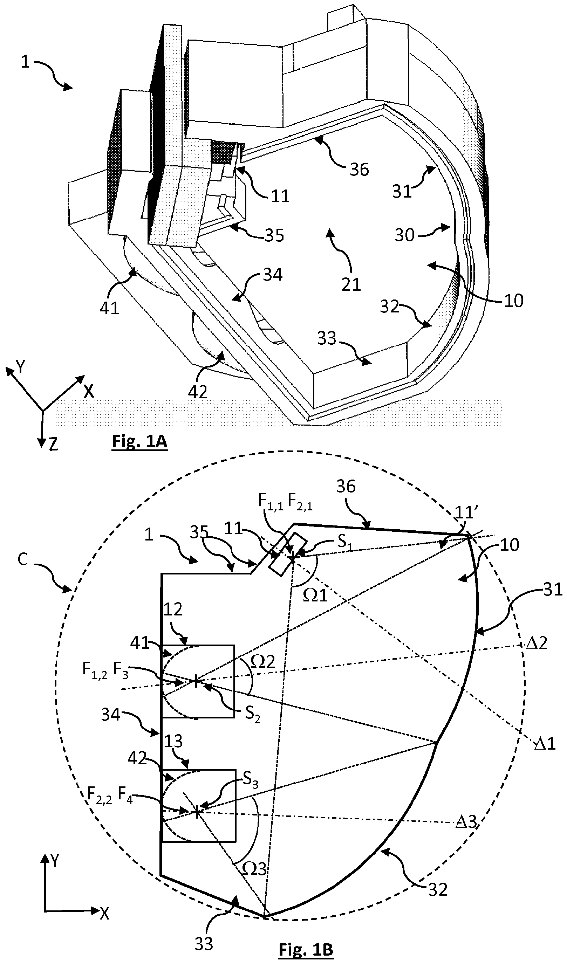

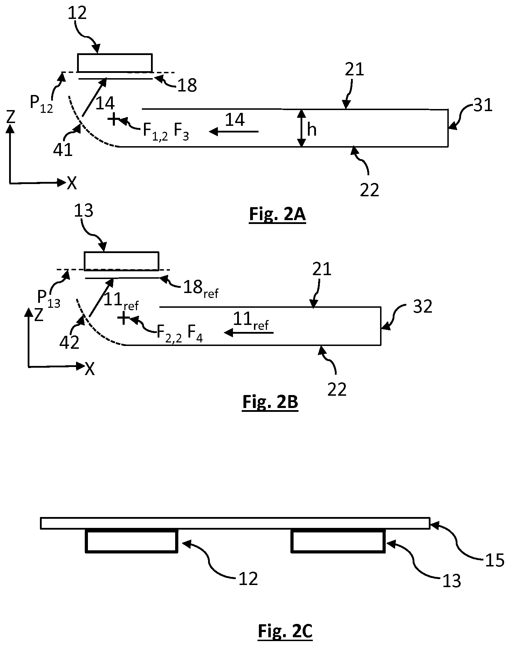

Les figures 1A, 1B ainsi que les figures 2A et 2B représentent un exemple de capteur de gaz 1 selon l'invention. Le capteur comporte une enceinte 10, apte à recevoir un gaz 2 à analyser.

Le capteur de gaz 1 comporte une source de lumière 11, apte à émettre l'onde lumineuse 11', dite onde lumineuse d'émission, selon une bande spectrale d'illumination $\Delta\lambda$. La bande spectrale d'illumination $\Delta\lambda$ peut s'étendre entre le proche ultraviolet et l'infrarouge moyen, entre 200 nm et 12 $\mu$m, et le plus souvent dans l'infrarouge, notamment entre 1 $\mu$m et 12 $\mu$m. La source de lumière 11 peut notamment être impulsionnelle, l'onde lumineuse d'émission 11' étant une impulsion de durée généralement comprise entre 50 ms et 1 s. Il peut notamment s'agir d'une source de lumière de type filament suspendu, parcouru par un courant électrique, et chauffé à une température comprise entre 400°C et 800°C de façon à émettre une lumière infrarouge.

L'enceinte 10 est délimitée par deux parois 21, 22, dites parois transversales, s'étendant selon un plan transversal XY. Les parois transversales sont représentées sur les figures 2A et 2B. Les parois transversales peuvent être parallèles au plan transversal XY, ou sensiblement parallèles à ce dernier, le terme sensiblement indiquant qu'une tolérance angulaire, par exemple +/- 10° ou ± 5°, est admise. Elles peuvent être planes ou incurvées. Elles sont distantes d'une hauteur h, typiquement comprise entre 100 $\mu$m et 1 cm, et de préférence entre 500 $\mu$m et 1 cm. La paroi transversale 21 est la paroi supérieure de la cavité 10, tandis que la paroi transversale 22 est la paroi inférieure de la cavité 10.

L'enceinte comporte également une paroi 30, représentée sur les figures 1A et 1B, dite paroi périphérique. La paroi périphérique 30 délimite l'enceinte 10, et s'étend entre la paroi transversale inférieure 21 et la paroi transversale supérieure 22. La paroi périphérique 30 s'étend autour d'un axe latéral Z, perpendiculaire au plan transversal XY. Elle est parallèle ou sensiblement parallèle à l'axe latéral Z.

L'onde lumineuse 11' émise par la source de lumière est réfléchie par la paroi périphérique 30 de façon à traverser l'enceinte 10 avant d'atteindre un photodétecteur 12, dit photodétecteur de mesure. Le photodétecteur de mesure 12 détecte alors une onde lumineuse 14, dite onde lumineuse transmise, résultant d'une atténuation progressive de l'onde lumineuse 11' émise par la source de lumière au fur et à mesure que l'onde lumineuse se propage à travers l'enceinte 10. Le photodétecteur de mesure 12 peut par exemple être une thermopile, configurée pour délivrer un signal dépendant de l'intensité de l'onde lumineuse à laquelle est exposé le photodétecteur. Il peut également s'agir d'une photodiode ou d'un autre type de photodétecteur infra-rouge. Le photodétecteur de mesure présente une surface sensible définissant un plan de détection $P_{12}$. Le photodétecteur de mesure 12 peut être couplé à un filtre 18 passe-bande, définissant une bande spectrale de mesure correspondant à une bande spectrale d'absorption d'une espèce gazeuse $G_s$ dont on souhaite déterminer une quantité $C_s$ dans le mélange gazeux. L'intensité $I$ de l'onde lumineuse 14 détectée par le photodétecteur de mesure 12 dépend de la quantité $C_s$ selon la relation de Beer-Lambert :

$$att = \frac{I}{I_0} = e^{-\mu(C_s)l} \ (1)$$

où :

- $\mu(C_s)$ est un coefficient atténuation, dépendant de la quantité $C_s$ recherchée;
- $l$ est l'épaisseur de gaz traversé par l'onde lumineuse dans l'enceinte ;
- $I_0$ est l'intensité de l'onde lumineuse incidente, qui correspond à l'intensité de l'onde atteignant le photodétecteur de mesure 12 en l'absence de gaz absorbant dans l'enceinte.

La comparaison entre $I$ et $I_0$, prenant la forme

$$\frac{I}{I_0}$$

d'un ratio $\frac{I}{I_0}$, correspond à une atténuation *att* générée par l'espèce gazeuse considérée.

Lors de chaque impulsion de la source de lumière 11, on peut ainsi déterminer $\mu(C_s)$, ce qui permet d'estimer $\hat{C}_s$ sachant que la relation entre $C_s$ et $\mu(C_s)$ est connue.

L'expression (1) suppose une maîtrise de l'intensité $I_0$ de l'onde lumineuse émise par la source de lumière 11. A cet effet, le dispositif comporte un photodétecteur de référence 13, agencé de telle sorte qu'il détecte une onde lumineuse, dite onde lumineuse de référence $11_{ref}$, atteignant le photodétecteur de référence 13 sans interagir avec le gaz présent dans l'enceinte 10, ou sans interagir significativement avec ce dernier. Dans cet exemple, le photodétecteur de référence 13 est une thermopile. L'intensité de l'onde lumineuse de référence $11_{ref}$, détectée par le photodétecteur de référence 13, est désignée par le terme intensité de référence $I_{ref}$. Le photodétecteur de mesure présente une surface sensible définissant un plan de détection $P_{13}$. Dans cet exemple, le photodétecteur de référence 13 est associé à un filtre optique, dit filtre optique de référence $18_{ref}$. Le filtre optique de référence $18_{ref}$ définit une bande passante de référence, correspondant à une plage de longueurs d'onde non significativement absorbées par le gaz analysé. La bande passante de référence est par exemple centrée autour de la longueur d'onde $3.91\ \mu m$. La mesure de $I_{ref}$ permet l'estimation de $I_0$, ce qui permet de déterminer $\mu(C_s)$, puis d'estimer $\hat{C}_s$. La mesure de $I_{ref}$ permet notamment de tenir compte des variations temporelles de l'intensité $I_0$ de l'onde lumineuse émise par la source de lumière 11.

Afin de simplifier la fabrication du capteur 1, les inventeurs ont estimé qu'il était préférable que le photodétecteur de mesure 12 et le photodétecteur de référence 13 soient orientés de telle sorte que leurs plans de détection respectifs $P_{12}$, $P_{13}$ soient parallèles ou sensiblement parallèles à une paroi transversale. Ainsi, les plans de détection $P_{12}$ et $P_{13}$ sont perpendiculaires, ou sensiblement perpendiculaires, à l'axe latéral Z. Par sensiblement parallèle, on entend parallèle à une tolérance angulaire près, par exemple $\pm\ 10°$ ou $\pm\ 5°$. Par sensiblement perpendiculaire, on entend perpendiculaire à une tolérance angulaire près, par exemple $\pm\ 10°$ et de préférence $\pm\ 5°$.

Avec une telle orientation, le photodétecteur de mesure 12 et le photodétecteur de référence 13 peuvent être fixés sur une même carte électronique 15, dite carte porteuse, de préférence plane. La carte porteuse 15 peut être rapportée face à une paroi transversale de l'enceinte 10. La figure 2C schématise la carte porteuse 15, sur laquelle sont rapportés les photodétecteurs 12 et 13. Le capteur 1 bénéficie alors d'une conception simple, facilitant le montage. Il suffit de disposer le photodétecteur de mesure 12 et le photodétecteur 13 sur la même carte porteuse, et de rapporter cette dernière contre une paroi transversale du capteur, qu'il s'agisse de la paroi transversale supérieure 21 ou de la paroi transversale inférieure 22. Dans cet exemple, les photodétecteurs de mesure et de référence sont appliqués contre la paroi transversale supérieure 21. Cette conception permet également d'utiliser une carte porteuse plane, et de préférence rigide, ce qui réduit le coût de fabrication. Cela permet de simplifier le raccordement des photodétecteurs, à des fins d'alimentation électrique, de contrôle commande ou de collecte des signaux détectés.

Le positionnement des photodétecteurs 12, 13 et leur orientation nécessite que l'enceinte 10 soit configurée selon une géométrie particulière, de façon à concilier la sensibilité de détection et la compacité. Les paragraphes suivant décrivent un exemple d'une telle géométrie.

La paroi périphérique 30 prend la forme d'une paroi cylindrique, dont la section, dans le plan transversal XY, est délimitée par une première surface courbe 31 et une deuxième surface courbe 32, distinctes l'une de l'autre. Elle est également délimitée par des autres surfaces, planes ou incurvées 33, 34, 35 et 36. La première surface courbe 31 et la deuxième surface courbe 32 sont réfléchissantes. Les autres surfaces 33, 34, 35 et 36 s'étendent entre la première surface courbe 31 et la deuxième surface courbe 32. Le nombre et la forme des autres surfaces peuvent varier selon les configurations. Les autres surfaces sont de préférence réfléchissantes, ou comportent des parties réfléchissantes.

Par surface réfléchissante, on entend une surface dont le coefficient de réflexion, dans tout ou partie de la bande spectrale d'illumination $\Delta\lambda$, est supérieur à 50%, et de préférence supérieur à 80%. Une paroi réfléchissante peut être formée à l'aide d'un matériau réfléchissant tel un métal, par exemple de l'or.

De préférence, les parois transversales 21 et 22 sont également réfléchissantes ou comportent des parties réfléchissantes.

La source de lumière 11 est configurée pour émettre une onde lumineuse 11' se propageant dans l'enceinte 10 selon un faisceau d'émission $\Omega 1$. Le faisceau d'émission $\Omega 1$, est divergent. Il s'étend autour d'un axe central d'émission $\Delta 1$. Il décrit un cône d'émission, tronqué par les parois transversales et s'étendant entre la source de lumière et la première ainsi que la deuxième surfaces courbes 31 et 32. La source de lumière 11 forme le sommet S1 du faisceau d'émission $\Omega 1$.

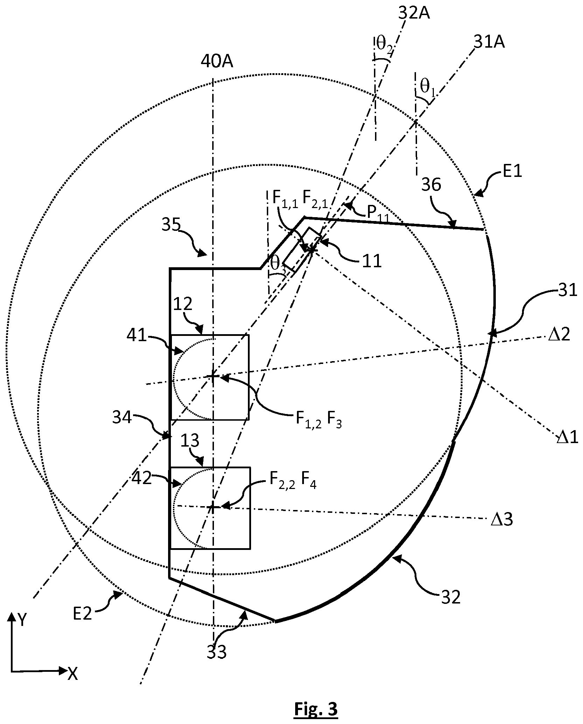

La première surface réfléchissante 31 présente un premier foyer $F_{1,1}$ et un deuxième foyer $F_{1,2}$, distinct du premier foyer $F_{1,1}$. Elle peut par exemple suivre, selon le plan transversal XY, le contour d'une partie d'une première ellipse E1. La deuxième surface réfléchissante 32 présente un premier foyer $F_{2,1}$ et un deuxième foyer $F_{2,2}$, distinct du premier foyer $F_{2,1}$. La deuxième surface réfléchissante 32 est distincte de la première surface réfléchissante 31. Elle peut par exemple suivre, selon le plan transversal XY, le contour d'une partie d'une deuxième ellipse E2. La première surface réfléchissante 31 et la deuxième surface réfléchissante 32 peuvent être composées de facettes planes, adjacentes les unes des autres, dont l'ensemble décrit une courbe, et en particulier une ellipse. Ainsi, la première surface réfléchissante 31 et la deuxième surface réfléchissante 32 sont de préférence elliptiques dans le plan transversal XY. Les ellipses E1 et E2 sont représentées sur la figure 3.

La première surface réfléchissante 31 est configurée pour recevoir une première partie du faisceau d'émission $\Omega 1$, de façon à la réfléchir en direction du photodétecteur de mesure 12. De cette façon, une partie de l'onde lumineuse 11' située dans le faisceau d'émission $\Omega 1$ est réfléchie pour se propager vers le photodétecteur de mesure 12 en formant un faisceau de mesure $\Omega 2$ qui converge à partir de la première surface réfléchissante 31. Le sommet S1 du faisceau d'émission $\Omega 1$ est de préférence confondu avec le premier foyer $F_{1,1}$ de la première surface réfléchissante 31, ou soit disposé à proximité de ce dernier. Le terme à proximité désigne une distance inférieure à 1 cm, et de préférence inférieure à 0.5 cm. Le faisceau de mesure $\Omega 2$ converge en direction du deuxième foyer $F_{1,2}$ de la première surface réfléchissante 31. Le faisceau de mesure décrit un cône tronqué par les parois transversales, et s'étendant entre la première surface réfléchissante 31 et son deuxième foyer $F_{1,2}$. Le faisceau de mesure $\Omega 2$ s'étend autour d'un deuxième axe central $\Delta 2$. Le deuxième foyer $F_{1,2}$ de la première surface courbe 31 est disposé sur le deuxième axe central $\Delta 2$, et forme un sommet S2 du faisceau de mesure $\Omega 2$.

Du fait des orientations respectives de la première surface réfléchissante 31, parallèle à l'axe Z, et du plan de détection $P_{12}$ du photodétecteur de mesure 12, un premier réflecteur 41 permet de réfléchir tout ou partie du faisceau de mesure $\Omega 2$ vers le photodétecteur de mesure 12. De préférence, le premier réflecteur 41 est parabolique. Il est agencé pour renvoyer le faisceau de mesure $\Omega 2$, se propageant depuis la première surface réfléchissante 31, vers le photodétecteur de mesure 12. Du fait de la géométrie parabolique du premier réflecteur 41, ce dernier forme une onde, dite onde transmise 14, atteignant le photodétecteur de mesure 12 en formant un faisceau parallèle. La parabole 41 présente un foyer $F_3$, de préférence confondu avec le deuxième foyer $F_{1,2}$ de la première surface réfléchissante 31. Le foyer $F_3$ du premier réflecteur 41 peut également être disposé à proximité du deuxième foyer $F_{1,2}$ de la première surface réfléchissante 31, et/ou situé sur le deuxième axe central $\Delta 2$. La figure 2A représente une coupe du capteur 1, selon le plan latéral XZ, passant par l'axe central $\Delta 2$.

La deuxième surface réfléchissante 32 est configurée pour recevoir une deuxième partie du faisceau d'émission $\Omega 1$, de façon à la réfléchir en direction du photodétecteur de référence 13. De cette façon, une partie de l'onde lumineuse située dans le faisceau d'émission $\Omega 1$ est réfléchie pour se propager vers le photodétecteur de référence 13 en formant un faisceau de référence $\Omega 3$. Le faisceau de référence $\Omega 3$ converge à partir de la deuxième surface réfléchissante 32. Il est préférable que le sommet S1 du faisceau d'émission $\Omega 1$ soit confondu avec le premier foyer $F_{2,1}$ de la deuxième surface réfléchissante 32, ou soit disposé à proximité de ce dernier. Ainsi, les premiers foyers respectifs de la première surface réfléchissante 31 et de la deuxième surface réfléchissante 32 sont confondus, ou, de façon moins avantageuse, disposés à proximité l'un de l'autre. Le faisceau de référence $\Omega 3$ converge en direction du deuxième foyer $F_{2,2}$ de la deuxième surface réfléchissante 32. Le faisceau de référence décrit un cône tronqué par les parois transversales, et s'étendant entre la deuxième surface réfléchissante 32 et son deuxième foyer $F_{2,2}$. Le faisceau de référence $\Omega 3$ s'étend autour d'un troisième axe central $\Delta 3$. Le deuxième foyer $F_{2,2}$ de la deuxième surface réfléchissante 32 est disposé sur le troisième axe central $\Delta 3$, et forme un sommet S3 du faisceau de référence $\Omega 3$.

Du fait des orientations respectives de deuxième surface réfléchissante 32, parallèle à l'axe Z, et du plan de détection $P_{13}$ du photodétecteur de référence 13, un deuxième réflecteur 42 permet de réfléchir tout ou partie du faisceau de référence $\Omega 3$ vers le photodétecteur de référence 13. De préférence, le deuxième réflecteur 42 est une parabole, agencée pour renvoyer le faisceau de référence, se propageant depuis la deuxième surface réfléchissante 32, vers le photodétecteur de référence 13. La parabole 42 présente un foyer $F_4$, de préférence confondu avec le deuxième foyer $F_{2,2}$ de la première surface réfléchissante 32. Le foyer $F_4$ du deuxième réflecteur 42 peut également être disposé à proximité du deuxième foyer $F_{2,2}$ de la deuxième surface réfléchissante 32, et/ou situé sur le troisième axe central $\Delta 3$. Du fait de la géométrie parabolique du deuxième réflecteur 42, l'onde de référence $11_{ref}$ est réfléchie et atteint le photodétecteur de référence 13 en formant un faisceau parallèle. La figure 2B représente une coupe du capteur 1, selon le plan latéral XZ, passant par l'axe central $\Delta 3$.

Dans l'exemple représenté sur les figures 1A et 1B, la source de lumière 11 s'étend en partie à l'intérieur de l'enceinte 10. Il peut en être de même pour le photodétecteur de mesure 12 et le photodétecteur de référence 13. Selon des variantes, la source de lumière 11, et/ou le photodétecteur de mesure 12 et/ou le photodétecteur de référence 13 sont disposés à l'extérieur de l'enceinte 10. Des fenêtres transparentes ou des ouvertures sont alors ménagées dans l'enceinte 10, de façon à permettre une transmission de la lumière de part et d'autre de la paroi périphérique 30 ou de part et d'autre des parois transversales.

Outre les surfaces réfléchissantes 31 et 32, la paroi périphérique comporte des autres surfaces 33, 34, 35, 36 décrivant, dans cet exemple, des portions planes. Ces surfaces ne sont pas nécessairement planes et leur nombre peut varier.

Une enceinte telle que précédemment décrite permet de délimiter un volume particulièrement compact. Selon le plan latéral XY, l'enceinte 10 est inscrite dans un cercle C dont le diamètre est de préférence inférieur à 20 mm, et par exemple égal à 17 mm. Le cercle C est représenté sur la figure 1B.

La figure 3 représente une coupe du capteur 1 selon le plan transversal XY. Dans ce dernier, la première surface 31 suit le contour d'une première ellipse E1. La première ellipse E1 définit un grand axe s'étendant selon une première direction 31A. Dans le plan transversal XY, la deuxième surface 32 suit le contour d'une deuxième ellipse E2. La deuxième ellipse E2 définit un grand axe s'étendant selon une deuxième direction 32A. On a également représenté une droite, de direction 40A, passant par le foyer F3 du premier réflecteur 41 et par le foyer F4 du deuxième réflecteur 42. La première direction 31A forme un premier angle $\theta_1$ avec la direction 40A. La deuxième direction 32A forme un deuxième angle $\theta_2$ avec la direction 40A. La source de lumière 11 comporte une surface d'émission d'étendant selon un plan d'émission $P_{11}$. Le plan d'émission s'étend parallèlement à l'axe latéral Z. Le plan d'émission $P_{11}$ forme un angle $\theta_3$ avec la direction 40A.

Les inventeurs ont déterminé qu'il est préférable que :

- $\theta_1$ soit égal à 50°, ou compris entre 40° et 55° ;
- et/ou que $\theta_2$ soit égal à 33°, ou compris entre 20° et 35° ;
- et/ou que $\theta_3$ soit égal à 50°, ou compris entre 30° et 50° ;

De préférence, les trois conditions angulaires relatives à $\theta_1$, $\theta_2$, et $\theta_3$ mentionnées ci-dessus se cumulent.

Quel que soit le mode de réalisation, les surfaces réfléchissantes 31 et 32 sont agencées pour conjuguer la source de lumière 11 respectivement aux foyers du premier réflecteur 41 et du deuxième réflecteur 42. Le premier réflecteur 41 et le deuxième réflecteur 42 sont agencés pour réfléchir, tout ou partie du faisceau de mesure et du faisceau de référence, respectivement vers le photodétecteur de mesure 12 et vers le photodétecteur de référence 13. Ainsi, l'ensemble formé par la première surface réfléchissante 31 et le premier réflecteur 41 permet de conjuguer la source de lumière 11 au photodétecteur de mesure 12. L'ensemble formé par la deuxième surface réfléchissante 32 et le deuxième réflecteur 42 permet de conjuguer la source de lumière 11 au photodétecteur de référence 13.

La première ellipse E1 et la deuxième ellipse E2 présentent par exemple les caractéristiques géométriques indiquées ci-après.

Première ellipse E1 :

- longueur du grand axe : entre 8 et 9 mm, par exemple 8.1 mm ;
- excentricité : entre 0.3 et 0.4, par exemple 0.4.

Deuxième ellipse E2 :

- longueur du grand axe : entre 8 et 9 mm, par exemple 8.4 mm ;
- excentricité : entre 0.55 et 0.65, par exemple 0.65.

Dans cet exemple, la paroi périphérique 30 s'étend, selon l'axe latéral Z, selon une hauteur h égale à 0.9 mm. De préférence, la hauteur h est comprise entre 100 $\mu$m et 1.5 mm, et de préférence entre 500 $\mu$m et 1.2 mm ou 1 mm. L'équation cartésienne d'une parabole étant :

$$y = \frac{x^2}{p}$$

, les paraboles définissant le premier réflecteur 41 et le deuxième réflecteur 42 sont, dans cet exemple, telles que p = 0.9 .

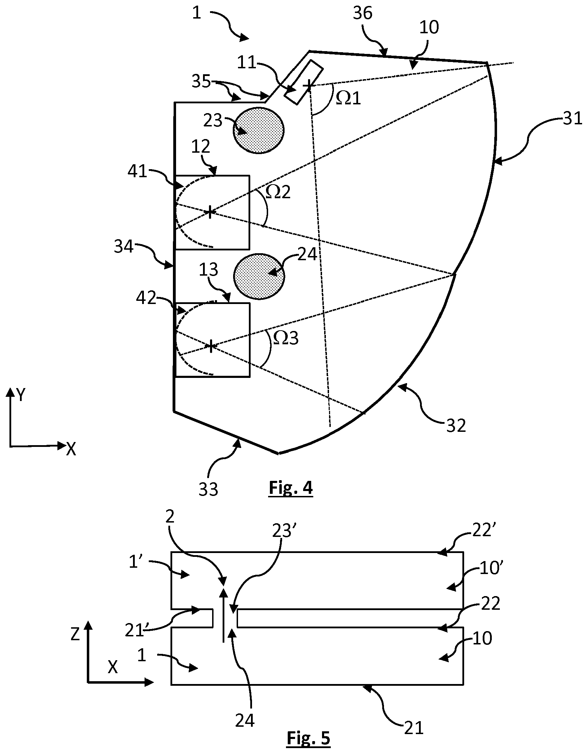

L'enceinte 10 comporte une ouverture d'admission 23, permettant l'admission du gaz dans l'enceinte ainsi qu'une ouverture d'évacuation 24, permettant l'évacuation du gaz de l'enceinte. Ces ouvertures sont ménagées sur une des parois transversales 21 ou 22 ou sur chaque paroi transversale. La position des ouvertures sur les parois transversales n'est pas indifférente et on a estimé qu'il était préférable de disposer ces ouvertures de telle sorte que les projections respectives, selon l'axe latéral Z, du faisceau d'émission $\Omega1$ et du faisceau de mesure $\Omega2$, soient situées à l'extérieur de chaque ouverture. Ainsi, chaque ouverture d'admission 23 ou d'évacuation 24 est ménagée, dans une paroi transversale, de façon à s'étendre à l'extérieur des projections, sur ladite paroi, du faisceau d'émission $\Omega1$ et du faisceau de mesure $\Omega2$. Un tel positionnement permet de limiter l'impact de l'ouverture sur la détection effectuée par le photodétecteur de mesure 12. De préférence, chaque ouverture d'admission ou d'évacuation est également disposée de façon à s'étendre également à l'extérieur de la projection, selon l'axe latéral Z, du faisceau de référence $\Omega3$. Cela permet de limiter l'impact de l'ouverture sur la détection effectuée par le photodétecteur de référence 13. Sur la figure 4, on a représenté, en grisé, un exemple de positions des ouvertures 23 et 24 dans le plan transversal XY.

La disposition des ouvertures d'admission ou d'évacuation dans les parois transversales permet de raccorder plus aisément le capteur 1 à un circuit fluidique d'admission ou d'évacuation de gaz. Lorsqu'une ouverture 23 est pratiquée dans la première paroi transversale 21 et qu'une autre ouverture 24 est pratiquée dans la deuxième paroi transversale 22, il est possible de superposer deux enceintes l'une sur l'autre, de façon à former un dispositif de détection comportant au moins deux capteurs 1,1' tels que précédemment décrits. Un tel dispositif est représenté sur la figure 5. Le dispositif de détection est agencé de façon que deux enceintes 10, 10' de chaque capteur soient superposées l'une à l'autre, une deuxième paroi transversale 22 d'une première enceinte 10 étant assemblée à une première paroi transversale 21' d'une deuxième enceinte 10', cette dernière s'étendant entre deux parois transversales 21', 22'. Ainsi, le gaz à analyser 2 peut circuler d'un capteur à un autre à travers les ouvertures pratiquées dans chaque paroi transversale. Sur cette figure, le déplacement du gaz est illustré par une flèche. Une telle configuration permet de disposer de plusieurs capteurs superposés l'un à l'autre, chaque capteur étant dédié à la détection d'une espèce gazeuse prédéterminée.

L'invention pourra être utilisée pour des capteurs de gaz dans différents domaines, par exemple l'environnement, en particulier le contrôle de la pollution atmosphérique, l'industrie, par exemple l'industrie chimique, pétrolière ou agroalimentaire, ou la santé.

## Revendications

1. Capteur (1) de gaz comportant une enceinte (10), apte à recevoir le gaz (2), le capteur comportant également :

   - une source de lumière (11), apte à émettre une onde lumineuse (11') se propageant dans l'enceinte selon un faisceau d'émission ($\Omega1$) ;
   - un photodétecteur de mesure (12) et un photodétecteur de référence (13), étant chacun apte à détecter une onde lumineuse émise par la source de lumière (11) et ayant traversé l'enceinte, le photodétecteur de mesure et le photodétecteur de référence s'étendant respectivement selon un plan de détection ($P_{12}$, $P_{13}$);

   le capteur étant tel que l'enceinte (10) s'étend entre deux parois transversales (21, 22), disposées l'une face à l'autre, les parois transversales étant reliées l'une à l'autre par une paroi périphérique (30), s'étendant, entre les parois transversales, autour d'un axe latéral (Z), la paroi périphérique (30) comportant :

   - une première surface réfléchissante courbe (31), apte à recevoir une première partie du faisceau d'émission ($\Omega1$) pour la réfléchir, formant ainsi un faisceau de mesure ($\Omega2$);
   - une deuxième surface réfléchissante courbe (32), apte à recevoir une deuxième partie du faisceau d'émission ($\Omega1$) pour la réfléchir, formant ainsi un faisceau de référence ($\Omega3$);

   le capteur étant **caractérisé en ce que** :

   - le plan de détection ($P_{12}$) du photodétecteur de mesure et le plan de détection ($P_{13}$) du photodétecteur de référence s'étendent parallèlement ou sensiblement parallèlement à une paroi transversale ;

   - le capteur comporte un premier réflecteur (41), agencé pour réfléchir tout ou partie du faisceau de mesure ($\Omega2$) vers le photodétecteur de mesure, et un deuxième réflecteur (42), agencé pour réfléchir tout ou partie du faisceau de référence ($\Omega3$) vers le photodétecteur de référence.

2. Capteur selon l'une quelconque des revendications précédentes, dans lequel :

   - la première surface réfléchissante (31) suit, dans un plan transversal (XY), perpendiculaire à l'axe latéral Z, une partie d'une première ellipse (E1), définissant un premier foyer ($F_{1,1}$);
   - le premier foyer de la première ellipse est situé sur la source de lumière (11), ou à une distance de la source de lumière inférieure à 5 mm ;

   de telle sorte que le faisceau d'émission ($\Omega1$) se propage vers la première surface réfléchissante (31) en formant un faisceau divergent.

3. Capteur selon la revendication 2, dans lequel la première ellipse (E1) définit un deuxième foyer ($F_{1,2}$), de telle sorte que le faisceau de mesure ($\Omega2$), réfléchi par la première surface réfléchissante (31), se propage vers le deuxième foyer de la première ellipse en formant un faisceau convergent.

4. Capteur selon la revendication 3, dans lequel :

   - le premier réflecteur (41) est de forme parabolique, définissant un foyer ($F_3$);
   - le foyer du premier réflecteur ($F_3$) est confondu avec le deuxième foyer ($F_{1,2}$) de la première ellipse (E1), ou situé à une distance inférieure à 5 mm de ce dernier.

5. Capteur selon l'une quelconque des revendications précédentes, dans lequel :

   - la deuxième surface réfléchissante (32) suit, dans un plan transversal (XY), perpendiculaire à l'axe latéral (Z), une partie d'une deuxième ellipse (E2), définissant un premier foyer ($F_{2,1}$);
   - le premier foyer de la deuxième ellipse est situé sur la source de lumière (11), ou à une distance de la source de lumière inférieure à 5 mm ;

   de telle sorte que le faisceau d'émission ($\Omega1$) se propage vers la deuxième surface réfléchissante (32) en formant un faisceau divergent.

6. Capteur selon la revendication 5, dans lequel la deuxième ellipse (E2) définit un deuxième foyer ($F_{2,2}$), de telle sorte que le faisceau de référence ($\Omega3$), réfléchi par la deuxième surface réfléchissante (32), se propage vers le deuxième foyer de la deuxième ellipse en formant un faisceau convergent.

**7.** Capteur selon la revendication 6, dans lequel :

- le deuxième réflecteur (42) est de forme parabolique, définissant un foyer ($F_4$);
- le foyer du deuxième réflecteur ($F_4$) est confondu avec le deuxième foyer ($F_{2,2}$) de la deuxième ellipse (E2), ou situé à une distance inférieure à 5 mm de ce dernier.

**8.** Capteur selon l'une quelconque des revendications précédentes, dans lequel l'enceinte comporte au moins une ouverture (23), ménagée dans une desdites parois transversales (21, 22), et destinée à l'admission ou à l'évacuation du gaz (2), l'ouverture étant ménagée, dans la paroi transversale, à l'extérieur d'une projection selon l'axe latéral (Z), et sur ladite paroi transversale, du faisceau d'émission ($\Omega 1$) et du faisceau de mesure ($\Omega 2$).

**9.** Capteur selon la revendication 8, dans lequel l'ouverture est également localisée à l'extérieur d'une projection, selon l'axe latéral (Z), et sur ladite paroi transversale, du faisceau de référence ($\Omega 3$).

**10.** Capteur selon l'une quelconque des revendications précédentes, dans lequel les parois transversales (21, 22) s'étendent selon un plan transversal (XY), perpendiculaire à l'axe latéral (Z).

**11.** Capteur selon l'une quelconque des revendications précédentes, dans lequel selon un plan transversal (XY), perpendiculaire à l'axe latéral (Z), l'enceinte (10) délimite un espace inscrit dans un cercle (C) de diamètre inférieur ou égal à 20 mm.

**12.** Dispositif de détection d'un gaz, comportant un premier capteur (1) selon l'une quelconque des revendications précédentes et un deuxième capteur (1') selon l'une quelconque des revendications précédentes, le premier capteur et le deuxième capteur étant superposés l'un à l'autre, de telle sorte qu'une paroi transversale (22) du premier capteur, comportant une ouverture (24), soit disposée face à une paroi transversale (21') du deuxième capteur, comportant une ouverture (23'), de façon à permettre une circulation de gaz (2) à travers les ouvertures ménagées dans lesdites parois transversales.

**13.** Procédé de détection d'un gaz dans un capteur selon l'une quelconque des revendications 1 à 11, comportant les étapes suivantes :

- activation de la source de lumière, de façon à générer une onde lumineuse d'émission (11') se propageant dans la cavité ;
- détection d'une intensité d'une onde lumineuse transmise (14), par le photodétecteur de mesure (12), dans une bande spectrale de mesure ;
- détection d'une intensité d'une onde lumineuse de référence (11ref), par le photodétecteur de référence, dans une bande spectrale de référence, différente de la bande spectrale de mesure ;
- estimation d'une quantité d'une espèce gazeuse dans le gaz à partir des intensités respectivement mesurées par le photodétecteur de mesure et par le photodétecteur de référence.

**Patentansprüche**

**1.** Gassensor (1) aufweisend eine Einhausung (10), die geeignet ist, das Gas (2) aufzunehmen, der Sensor ebenfalls aufweisend:

- eine Lichtquelle (11), die geeignet ist, eine Lichtwelle (11') zu emittieren, die sich in der Einhausung gemäß einem Emissionsbündel ($\Omega 1$) ausbreitet;
- einen Messphotodetektor (12) und einen Referenzphotodetektor (13), die jeweils geeignet sind, eine Lichtwelle zu detektieren, die von der Lichtquelle (11) emittiert wird und die Einhausung durchquert hat, wobei sich der Messphotodetektor und der Referenzphotodetektor jeweils gemäß einer Detektionsebene ($P_{12}$, $P_{13}$) erstrecken;

wobei der Sensor so beschaffen ist, dass sich die Einhausung (10) zwischen zwei Querwänden (21, 22) erstreckt, die einander gegenüber angeordnet sind, wobei die Querwände durch eine Umfangswand (30) miteinander verbunden sind, die sich zwischen den Querwänden um eine Seitenachse (Z) erstreckt, wobei die Umfangswand (30) Folgendes aufweist:

- eine erste gekrümmte reflektierende Fläche (31), die geeignet ist, einen ersten Abschnitt des Emissionsbündels ($\Omega 1$) zu empfangen, um ihn zu reflektieren, wobei ein Messbündel ($\Omega 2$) gebildet wird;
- eine zweite gekrümmte reflektierende Fläche (32), die geeignet ist, einen zweiten Abschnitt des Emissionsbündels ($\Omega 1$) zu empfangen, um ihn zu reflektieren, wobei ein Referenzbündel ($\Omega 3$) gebildet wird;

wobei der Sensor **dadurch gekennzeichnet ist, dass**:

- sich die Detektionsebene ($P_{12}$) des Messphotodetektors und die Detektionsebene ($P_{13}$) des Referenzphotodetektors parallel oder im Wesentlichen parallel zu einer Querwand erstrecken;

- der Sensor einen ersten Reflektor (41), der angeordnet ist, das gesamte oder einen Abschnitt des Messbündels ($\Omega$2) zum Messphotodetektor zu reflektieren, und einen zweiten Reflektor (42), der angeordnet ist, das gesamte oder einen Abschnitt des Referenzbündels ($\Omega$3) zum Referenzphotodetektor zu reflektieren, aufweist.

2. Sensor nach einem der vorhergehenden Ansprüche, wobei:

   - die erste reflektierende Fläche (31) in einer Querebene (XY) senkrecht zur Seitenachse Z einem Abschnitt einer ersten Ellipse (E1) folgt, wobei sie einen ersten Brennpunkt ($F_{1,1}$) definiert;
   - sich der erste Brennpunkt der ersten Ellipse über der Lichtquelle (11) oder in einem Abstand unter 5 mm von der Lichtquelle befindet;

   so dass sich das Emissionsbündel ($\Omega$1) unter Bildung eines auseinanderlaufenden Bündels zur ersten reflektierenden Fläche (31) ausbreitet.

3. Sensor nach Anspruch 2, wobei die erste Ellipse (E1) einen zweiten Brennpunkt ($F_{1,2}$), definiert, so dass sich das Messbündel ($\Omega$2), das von der ersten reflektierenden Fläche (31) reflektiert wird, unter Bildung eines zusammenlaufenden Bündels zum zweiten Brennpunkt der ersten Ellipse ausbreitet.

4. Sensor nach Anspruch 3, wobei:

   - der erste Reflektor (41) parabolisch geformt ist, wobei er einen Brennpunkt ($F_3$) definiert;
   - der Brennpunkt des ersten Reflektors ($F_3$) mit dem zweiten Brennpunkt ($F_{1,2}$) der ersten Ellipse (E1) zusammenfällt oder sich in einem Abstand unter 5 mm von letzterem befindet.

5. Sensor nach einem der vorhergehenden Ansprüche, wobei:

   - die zweite reflektierende Fläche (32) in einer Querebene (XY) senkrecht zur Seitenachse (Z) einem Abschnitt einer zweiten Ellipse (E2) folgt, wobei sie einen ersten Brennpunkt ($F_{2,1}$) DEFINIERT;
   - sich der erste Brennpunkt der zweiten Ellipse über der Lichtquelle (11) oder in einem Abstand unter 5 mm von der Lichtquelle befindet;

   so dass sich das Emissionsbündel ($\Omega$1) unter Bildung eines auseinanderlaufenden Bündels zur zweiten reflektierenden Fläche (32) ausbreitet.

6. Sensor nach Anspruch 5, wobei die zweite Ellipse (E2) einen zweiten Brennpunkt ($F_{2,2}$) definiert, so dass sich das Referenzbündel ($\Omega$3), das von der zweiten reflektierenden Fläche (32) reflektiert wird, unter Bildung eines zusammenlaufenden Bündels zum zweiten Brennpunkt der zweiten Ellipse ausbreitet.

7. Sensor nach Anspruch 6, wobei:

   - der zweite Reflektor (42) parabolisch geformt ist, wobei er einen Brennpunkt ($F_4$) definiert;
   - der Brennpunkt des zweiten Reflektors ($F_4$) mit dem zweiten Brennpunkt ($F_{2,2}$) der zweiten Ellipse (E2) zusammenfällt oder sich in einem Abstand unter 5 mm von letzterem befindet.

8. Sensor nach einem der vorhergehenden Ansprüche, wobei die Einhausung wenigstens eine Öffnung (23) aufweist, die in einer der Querwände (21, 22) vorgesehen und zur Aufnahme oder Ableitung des Gases (2) bestimmt ist, wobei die Öffnung in der Querwand außerhalb einer Projektion gemäß der Seitenachse (Z) und auf der Querwand des Emissionsbündels ($\Omega$1) und des Messbündels ($\Omega$2) vorgesehen ist.

9. Sensor nach Anspruch 8, wobei sich die Öffnung ebenfalls außerhalb einer Projektion gemäß der Seitenachse (Z) und auf der Querwand des Referenzbündels ($\Omega$3) befindet.

10. Sensor nach einem der vorhergehenden Ansprüche, wobei sich die Querwände (21, 22) gemäß einer Querebene (XY) senkrecht zur Seitenachse (Z) erstrecken.

11. Sensor nach einem der vorhergehenden Ansprüche, wobei gemäß einer Querebene (XY) senkrecht zur Seitenachse (Z) die Einhausung (10) einen Raum begrenzt, der in einem Kreis (C) mit einem Durchmesser kleiner als oder gleich 20 mm liegt.

12. Vorrichtung zur Detektion eines Gases, aufweisend einen ersten Sensor (1) nach einem der vorhergehenden Ansprüche und einen zweiten Sensor (1') nach einem der vorhergehenden Ansprüche, wobei der erste Sensor und der zweite Sensor so übereinander gelagert sind, dass eine Querwand (22) des ersten Sensors, die eine Öffnung (24) aufweist, gegenüber einer Querwand (21') des zweiten Sensors angeordnet ist, die eine Öffnung (23') aufweist, um eine Zirkulation von Gas (2) durch die Öffnungen zu gestatten, die in den Querwänden vorgesehen sind.

13. Verfahren zur Detektion eines Gases in einem Sensor nach einem der Ansprüche 1 bis 11, aufweisend die folgenden Schritte:

- Aktivieren der Lichtquelle, um eine Emissionslichtwelle (11') zu erzeugen, die sich im Hohlraum ausbreitet;
- Detektieren einer Intensität einer übertragenen Lichtwelle (14) in einem Messungsspektralband durch den Messphotodetektor (12);
- Detektieren einer Intensität einer Referenzlichtwelle (11ref) durch den Referenzphotodetektor in einem Referenzspektralband, das sich von dem Messungsspektralband unterscheidet;
- Schätzen einer Menge einer Gasspezies in dem Gas anhand der Intensitäten, die jeweils von dem Messphotodetektor und dem Referenzphotodetektor gemessen werden.

**Claims**

1. Gas sensor (1) comprising a chamber (10), capable of receiving the gas (2), the sensor also comprising:

   - a light source (11), capable of emitting a light wave (11') that is propagated in the chamber according to an emission beam ($\Omega$1);
   - a measurement photodetector (12) and a reference photodetector (13), each being capable of detecting a light wave emitted by the light source (11) and having passed through the chamber, the measurement photodetector and the reference photodetector extending respectively on a detection plane ($P_{12}$, $P_{13}$);

   the sensor being such that the chamber (10) extends between two transverse walls (21, 22), disposed facing one another, the transverse walls being linked to on another by a peripheral wall (30), extending, between the transverse walls, around a lateral axis (Z), the peripheral wall (30) comprising:

   - a first curved reflecting surface (31), capable of receiving a first portion of the emission beam ($\Omega$1) to reflect it, thus forming a measurement beam ($\Omega$2);
   - a second curved reflecting surface (32), capable of receiving a second portion of the emission beam ($\Omega$1) to reflect it, thus forming a reference beam ($\Omega$3);

   the sensor being **characterized in that**:

   - the detection plane ($P_{12}$) of the measurement photodetector and the detection plane ($P_{13}$) of the reference photodetector extend parallel or substantially parallel to a transverse wall;
   - the sensor comprises a first reflector (41), arranged to reflect all or part of the measurement beam ($\Omega$2) towards the measurement photodetector, and a second reflector (42), arranged to reflect all or part of the reference beam ($\Omega$3) towards the reference photodetector.

2. Sensor according to any one of the preceding claims, wherein:

   - the first reflecting surface (31) follows, in a transverse plane (XY), at right angles to the lateral axis Z, a portion of a first ellipse (E1), defining a first focus ($F_{1,1}$);
   - the first focus of the first ellipse is situated on the light source (11), or at a distance from the light source less than 5 mm;

   such that the emission beam ($\Omega$1) is propagated towards the first reflecting surface (31) in forming a divergent beam.

3. Sensor according to Claim 2, wherein the first ellipse (E1) defines a second focus ($F_{1,2}$), such that the measurement beam ($\Omega$2), reflected by the first reflecting surface (31), is propagated towards the second focus of the first ellipse in forming a convergent beam.

4. Sensor according to Claim 3, wherein:

   - the first reflector (41) is of parabolic form, defining a focus ($F_3$);
   - the focus of the first reflector ($F_3$) coincides with the second focus ($F_{1,2}$) of the first ellipse (E1), or is situated at a distance less than 5 mm therefrom.

5. Sensor according to any one of the preceding claims, wherein:

   - the second reflecting surface (32) follows, in a transverse plane (XY), at right angles to the lateral axis (Z), a portion of a second ellipse (E2), defining a first focus ($F_{2,1}$);
   - the first focus of the second ellipse is situated on the light source (11), or at a distance from the light source less than 5 mm;

   such that the emission beam ($\Omega$1) is propagated towards the second reflecting surface (32) in forming a divergent beam.

6. Sensor according to Claim 5, wherein the second ellipse (E2) defines a second focus ($F_{2,2}$), such that the reference beam ($\Omega$3), reflected by the second reflecting surface (32), is propagated towards the second focus of the second ellipse in forming a convergent beam.

7. Sensor according to Claim 6, wherein:

- the second reflector (42) is of parabolic form, defining a focus ($F_4$);
- the focus of the second reflector ($F_4$) coincides with the second focus ($F_{2,2}$) of the second ellipse (E2) or is situated at a distance less than 5 mm therefrom.

8. Sensor according to any one of the preceding claims, wherein the chamber comprises at least one aperture (23), formed in one of said transverse walls (21, 22), and intended to admit or discharge the gas (2), the aperture being formed, in the transverse wall outside of a projection, along the lateral axis (Z) and onto said transverse wall, of the emission beam ($\Omega 1$) and of the measurement beam ($\Omega 2$).

9. 9. Sensor according to Claim 8, wherein the aperture is also located outside of a projection, along the lateral axis (Z) and onto said transverse wall, of the reference beam ($\Omega 3$).

10. Sensor according to any one of the preceding claims, wherein the transverse walls (21, 22) extend along a transverse plane (XY), at right angles to the lateral axis (Z).

11. Sensor according to any one of the preceding claims, wherein, along a transverse plane (XY), at right angles to the lateral axis (Z), the chamber (10) delimits a space inscribed within a circle (C) of diameter less than or equal to 20 mm.

12. Gas detection device, comprising a first sensor (1) according to any one of the preceding claims and a second sensor (1') according to any one of the preceding claims, the first sensor and the second sensor being superposed one on top of the other, such that a transverse wall (22) of the first sensor, comprising an aperture (24), is disposed opposite a transverse wall (21') of the second sensor, comprising an aperture (23'), so as to allow a circulation of gas (2) through the apertures formed in said transverse walls.

13. Gas detection method in a sensor according to any one of Claims 1 to 11, comprising the following steps:

   - activation of the light source, so as to generate an emission light beam (11') that is propagated in the cavity;
   - detection of an intensity of a transmitted light wave (14), by the measurement photodetector (12), in a measurement spectral band;
   - detection of an intensity of a reference light wave (11ref), by the reference photodetector, in a reference spectral band, different from the measurement spectral band;
   - estimation of a quantity of a gaseous species in the gas based on the intensities respectively measured by the measurement photodetector and by the reference photodetector.

**Fig. 1A**

**Fig. 1B**

**Fig. 2A**

**Fig. 2B**

**Fig. 2C**

**Fig. 3**

**Fig. 4**

**Fig. 5**

**EP 3 850 339 B1**

## RÉFÉRENCES CITÉES DANS LA DESCRIPTION

**Documents brevets cités dans la description**

- EP 2133684 A

- EP 3208601 A